# EUROPÄISCHE PATENTANMELDUNG

(11) **EP 3 796 107 A1**
(43) Veröffentlichungstag der Anmeldung: **24.03.2021**
(21) Anmeldenummer: 19197796.6
(22) Anmeldetag: 17.09.2019
(51) Int. Cl.: G05B 9/02, G05B 19/418, G05B 19/042, G06F 21/00, H04L 9/32

(54) **LEITSYSTEM UND VERFAHREN ZUM ZERTIFIKATSMANAGEMENT**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Die vorliegende Erfindung betrifft ein Leitsystem (1) für eine verfahrenstechnische Anlage sowie ein Verfahren (100) zum Zertifikatsmanagement in einer verfahrenstechnischen Anlage. Ein zentraler Registrierungsdienst (2) ist dazu eingerichtet, einen Zertifizierungsantrag einer Anlagenkomponente (3) auf Grundlage komponentenspezifischer Information zu prüfen, wobei ein Software-Inventar (4) dazu eingerichtet ist, die komponentenspezifische Information zu speichern. Wenigstens ein lokaler Registrierungsdienst (5a, 5b, 5c) ist dazu eingerichtet, den Zertifizierungsantrag von der Anlagenkomponente (3) an den zentralen Registrierungsdienst (2) zu übermitteln. Erfindungsgemäß ist der wenigstens eine lokale Registrierungsdienst (5a, 5b) dabei dazu eingerichtet, die komponentenspezifische Information zusammen mit dem Zertifizierungsantrag an den zentralen Registrierungsdienst (2) zu übermitteln. Der zentrale Registrierungsdienst (2) ist dabei auch dazu eingerichtet, das Software-Inventar (4) auf Grundlage der übermittelten komponentenspezifischen Information zu verwalten.

## Beschreibung

Die vorliegende Erfindung betrifft ein Leitsystem für eine verfahrenstechnische Anlage sowie ein Verfahren zum Zertifikatsmanagement in einer verfahrenstechnischen Anlage.

Verfahrenstechnische Anlagen wie etwa Raffinerien oder Fabriken, in denen z. B. Stoffe hinsichtlich Zusammensetzung, Art oder Eigenschaft verändert werden, können äußerst komplexe Strukturen aufweisen. Eine Anlage kann sich beispielsweise aus einer Vielzahl, gegebenenfalls miteinander vernetzter und/oder voneinander abhängiger, Komponenten wie etwa Ventilen, Sensoren, Aktuatoren und/oder dergleichen zusammensetzen.

Um den Betrieb dieser Komponenten zu regulieren, insbesondere die (rechnergestützte) Kommunikation zwischen den Komponenten abzusichern, werden üblicherweise (digitale) Zertifikate verwendet, welche innerhalb eines entsprechenden Leitsystems ausgestellt, verteilt und geprüft werden können. Ein solches Leitsystem kann beispielsweise auf einer sog. Public-Key-Infrastruktur (PKI) basieren. Ohne gültige, d. h. von einem zentralen Zertifizierungsdienst ausgestellte, Zertifikate können die Komponenten nicht oder nur eingeschränkt betrieben werden, also z. B. nicht mit anderen Komponenten kommunizieren.

Aufgrund der erwähnten komplexen Struktur solch einer Anlage und der daraus resultierenden Vielzahl an Komponenten ist es üblich, die Anlagen zu segmentieren, also z. B. räumlich und/oder datentechnisch, etwa durch Firewalls, voneinander getrennte Anlagensegmente vorzusehen, in denen eine begrenzte Anzahl von Komponenten, die projekt- bzw. betriebstechnisch unmittelbar miteinander in Zusammenhang stehen, betrieben wird. Eine Ausstellung eines Zertifikats erfolgt in solchen, auch als heterogen bezeichneten Anlagen üblicherweise nur dann, wenn ein entsprechender Zertifizierungsantrag von einer Komponente von einem auch als "Registration Authority" bezeichneten zentralen Registrierungsdienst validiert, d. h. geprüft und als zulässig befunden, wurde.

Um die Anträge validieren zu können, müssen die antragstellenden Komponenten dem zentralen Registrierungsdienst bekannt sein und als vertrauenswürdig gelten. Zu diesem Zweck weisen Leitsysteme heterogener Anlagen üblicherweise zentrale Software-Inventare auf, in denen identitäts- sowie authentizitätsstiftende Daten zu den Komponenten, z. B. Gerätezertifikate etwa in Form von Herstellerzertifikaten (Manufacturer Device Certificates), Seriennummern und/oder dergleichen, hinterlegt sind. Üblicherweise werden diese Daten bei der Anlagenplanung bzw. Initialisierung der Anlage im Software-Inventar manuell hinterlegt.

Es ist eine Aufgabe der vorliegenden Erfindung, das Zertifikatsmanagement in einer verfahrenstechnischen Anlage zu verbessern, insbesondere flexibler zu gestalten.

Diese Aufgabe wird gelöst durch ein Leitsystem für eine verfahrenstechnische Anlage sowie ein Verfahren zum Zertifikatsmanagement in einer verfahrenstechnischen Anlage gemäß den unabhängigen Ansprüchen.

Ein erster Aspekt der Erfindung betrifft ein Leitsystem für eine verfahrenstechnischen Anlage, mit einem zentralen Registrierungsdienst, der dazu eingerichtet ist, einen Zertifizierungsantrag einer Anlagenkomponente auf Grundlage komponentenspezifischer Information zu prüfen, und einem Software-Inventar, das dazu eingerichtet ist, die komponentenspezifische Information zu speichern. Zudem weist das Leitsystem wenigstens einen lokalen Registrierungsdienst auf, der dazu eingerichtet ist, den Zertifizierungsantrag von der Anlagenkomponente an den zentralen Registrierungsdienst zu übermitteln. Erfindungsgemäß ist der wenigstens eine lokale Registrierungsdienst dabei dazu eingerichtet, die komponentenspezifische Information zusammen mit dem Zertifizierungsantrag, insbesondere als Bestandteil des Zertifizierungsantrags, an den zentralen Registrierungsdienst zu übermitteln. Der zentrale Registrierungsdienst ist dabei dazu eingerichtet, das Software-Inventar auf Grundlage der vom lokalen Registrierungsdienst übermittelten komponentenspezifischen Information zu verwalten.

Ein Zertifizierungsantrag im Sinne der Erfindung ist insbesondere eine Anforderung eines, z. B. operativen, Zertifikats für eine Anlagenkomponente und wird auch als Certificate Signing Request (CSR) bezeichnet. Solch eine Anforderung kann insbesondere wenigstens eine Signatur der jeweiligen, antragstellenden Anlagenkomponente enthalten, die gegebenenfalls von einem Registrierungsdienst auf Gültigkeit überprüft werden kann. Das Zertifikat kann es der Anlagenkomponente beispielsweise erlauben, mit anderen Anlagenkomponenten sicher, insbesondere verschlüsselt, zu kommunizieren.

Eine Anlagenkomponente im Sinne der Erfindung ist insbesondere eine physische oder als Software realisierte Komponente der verfahrenstechnischen Anlage. Eine Anlagenkomponente kann beispielsweise ein Gerät oder eine Applikation, die z. B. als Software auf einem Server der Anlage läuft, sein.

Ein zentrales Software-Inventar im Sinne der Erfindung ist insbesondere ein digitaler Katalog bzw. ein digitales Verzeichnis. Im Software-Inventar ist vorzugsweise zumindest ein Teil der Anlagenkomponenten mitsamt jeweiliger komponentenspezifischer Information erfassbar. Gegebenenfalls können im Software-Inventar auch als "Trust Chain" bezeichnete Zertifizierungspfade gespeichert werden, die eine Kette von Zertifikaten abbilden. Das Software-Inventar kann insbesondere als Datenbank oder als Liste ausgebildet sein.

Eine Verwaltung eines Software-Inventars im Sinne der Erfindung ist insbesondere eine Pflege des Software-Inventars. Im Rahmen der Verwaltung kann beispielsweise eine Modifikation des Software-Inventars durchgeführt werden. Vorzugsweise umfasst eine Verwaltung des Software-Inventars ein Hinzufügen, Ändern und/oder Löschen von Einträgen bzw. Datensätzen im Inventar.

Ein Aspekt der Erfindung basiert auf dem Ansatz, einem von einer Anlagenkomponente gestellten Zertifizierungsantrag zusätzliche Information bezüglich der antragstellenden Anlagenkomponente hinzuzufügen, insbesondere im Rahmen einer Weiterleitung eines solchen Antrags von einem lokalen Registrierungsdienst an einen zentralen bzw. anlagenübergreifenden Registrierungsdienst einer verfahrenstechnischen Anlage. Die komponentenspezifische Information kann insbesondere als Bestandteil des weitergeleiteten Zertifizierungsantrags an den zentralen Registrierungsdienst übermittelt werden. Bei der komponentenspezifischen Information handelt es sich vorzugsweise zumindest teilweise um Information, welche die Prüfung des Zertifizierungsantrags durch den zentralen Registrierungsdienst ermöglicht, insbesondere zur Prüfung notwendig ist. Insbesondere kann die komponentenspezifische Information sog. Metainformation umfassen, welche beispielsweise die Rolle der Anlagenkomponente in ihrem lokalen Anlagenumfeld, zum Beispiel innerhalb eines autark funktionsfähigen und abgesicherten Anlagensegments, bzw. die Vernetzung der Anlagenkomponente mit anderen Anlagenkomponenten beschreibt.

In bevorzugter Weise ist der zentrale Registrierungsdienst dabei dazu eingerichtet, die komponentenspezifische Information in einem, insbesondere zentralen bzw. anlagenübergreifenden, Software-Inventar zu speichern und somit beispielsweise für weitere, zukünftige Prüfungen von eingehenden Zertifizierungsanträgen oder für eine zentral veranlasste Erneuerung von Zertifikaten verfügbar zu machen. Das Software-Inventar eines Leitsystems für ein derartiges Zertifikatsmanagement kann insbesondere vollautomatisch durch den zentralen Registrierungsdienst verwaltet werden, d. h. ohne dass eine manuelle oder semi-manuelle Eingabe eines Benutzers notwendig ist. Mit anderen Worten ist der zentrale Registrierungsdienst vorzugsweise dazu eingerichtet, das Software-Inventar dynamisch zu verwalten, d. h. zum Beispiel das Software-Inventar während dem Betrieb der Anlage aktuell zu halten. Dadurch ist es z. B. möglich, auch bei einem Austausch einer Anlagenkomponente durch eine Ersatzkomponente die korrekte komponentenspezifische Information im Software-Inventar bereitzustellen und einen, insbesondere initialen, Zertifizierungsantrag der Ersatzkomponente korrekt zu prüfen.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform ist der zentrale Registrierungsdienst dazu eingerichtet, auf Grundlage der übermittelten komponentenspezifischen Information bereits im Software-Inventar gespeicherte, insbesondere komponentenspezifische, Information zu aktualisieren. Insbesondere kann der zentrale Registrierungsdienst dazu eingerichtet sein, bereits gespeicherte Information zu ändern, zu ergänzen und/oder zu erweitern. Es ist beispielsweise denkbar, dass im Fall einer geänderten Projektierung, gemäß welcher die Anlagenkomponente zumindest teilweise mit anderen und/oder zusätzlichen Komponenten kommunizieren muss, die entsprechende, im Software-Inventar gespeicherte Information angepasst wird. Dies ermöglicht eine dauerhaft zuverlässige Prüfung von Zertifikatsanträgen durch den zentralen Registrierungsdienst.

In einer weiteren bevorzugten Ausführungsform ist der zentrale Registrierungsdienst dazu eingerichtet, für eine Anlagenkomponente, zu der noch keine, insbesondere komponentenspezifische, Information im Software-Inventar gespeichert ist, einen neuen Datensatz auf Grundlage der übermittelten komponentenspezifischen Information anzulegen. Dabei ist der zentrale Registrierungsdienst vorzugsweise dazu eingerichtet, im Zertifizierungsantrag enthaltene Information, zum Beispiel eine Signatur unter dem Antrag und/oder eine Geräte-ID, die etwa durch eine Seriennummer dargestellt werden kann, zusammen mit weiterer komponentenspezifischer Information in das Software-Inventar zu übernehmen. Dadurch ist es möglich, ein im Wesentlichen leeres Software-Inventar zum Beispiel bei Inbetriebnahme der Anlage automatisch zu füllen.

In einer weiteren bevorzugten Ausführungsform ist der zentrale Registrierungsdienst dazu eingerichtet, die übermittelte komponentenspezifische Information mit im Software-Inventar gespeicherter, insbesondere komponentenspezifischer, Information zu vergleichen und bei Feststellen einer Inkonsistenz ein entsprechendes Signal zu erzeugen. Wird ein Gerät beispielsweise irrtümlich durch mehrere Projekte eingebunden, d. h. zum Beispiel in unterschiedlichen Prozessen eingesetzt, kann der zentrale Registrierungsdienst dies anhand der in Bezug auf die mehreren Projekte eingehenden Zertifizierungsanträge, insbesondere der damit übermittelten und im Software-Inventar zu speichernden bzw. gespeicherten komponentenspezifischen Information, erkennen und eine entsprechende Meldung ausgeben. Insbesondere in komplexen Anlagen kann das Risiko einer fehlerhaften Projektierung einer Anlagenkomponente dadurch vermindert werden.

In einer weiteren bevorzugten Ausführungsform ist der wenigstens eine lokale Registrierungsdienst dazu eingerichtet, den Zertifizierungsantrag der Anlagenkomponente auf Grundlage der komponentenspezifischen Information einer Vorprüfung zu unterziehen. Insbesondere kann bereits der lokale Registrierungsdienst innerhalb eines Anlagensegments die Zulässigkeit des Zertifizierungsantrags prüfen, z. B. nach anlagensegmentspezifischen oder für das verwendete Übermittlungsprotokoll spezifischen Kriterien. Vorzugsweise ist der wenigstens eine lokale Registrierungsdienst dazu eingerichtet, in Abhängigkeit eines Ergebnisses der Prüfung, insbesondere bei einer Zertifizierung des Zertifizierungsantrags, den Zertifizierungsantrag zusammen mit der komponentenspezifischen Information an den zentralen Registrierungsdienst weiterzuleiten. Dadurch können Anträge, die sich zum Beispiel bereits innerhalb eines Anlagensegments als nicht zulässig herausstellen, frühzeitig herausgefiltert und somit der Datenverkehr innerhalb des Leitsystems reduziert werden.

In einer weiteren bevorzugten Ausführungsform ist der wenigstens eine lokale Registrierungsdienst dazu eingerichtet, die komponentenspezifische Information von einer Verwaltungseinrichtung zu beziehen, welche zur Verwaltung der Anlagenkomponente eingerichtet ist. Unter einer Verwaltung einer Anlagenkomponente ist hierbei insbesondere eine Konfiguration und/oder Steuerung der Anlagenkomponente zu verstehen. Bei der Verwaltungseinrichtung kann es sich beispielsweise um eine sog. Engineering Station handeln, welche die Projektierung eines Anlagensegments bzw. dessen Anlagenkomponenten umfasst und damit dessen autarken Betrieb und dessen Absicherung ermöglicht. Aus der Projektierung, d. h. der Information bezüglich des Zusammenspiels der Anlagenkomponenten innerhalb des Anlagensegments, kann der lokale Registrierungsdienst vorzugsweise alle im Hinblick auf die Prüfung durch den zentralen Registrierungsdienst oder auch auf die Vorprüfung durch ihn selbst die relevante komponentenspezifische Information ableiten. Dabei ist das Zurückgreifen auf von der Verwaltungseinrichtung gespeicherte Information besonders vorteilhaft, da die Verwaltungseinrichtung üblicherweise dauerhaft betrieben wird und somit die Information jederzeit abgegriffen werden kann.

In einer weiteren bevorzugten Ausführungsform weist das Leitsystem eine Verwaltungseinrichtung mit einer Schnittstelle auf, wobei die auch als Adapter bezeichnete Schnittstelle dazu eingerichtet ist, komponentenspezifische Information, insbesondere der antragstellenden Anlagenkomponente, zu ermitteln und für den wenigstens einen lokalen Registrierungsdienst bereitzustellen. Die Schnittstelle kann dabei auch dazu eingerichtet sein, die ermittelte Information zur Verwendung durch den lokalen Registrierungsdienst aufzubereiten, z. B. in ein entsprechendes Datenformat zu überführen. Die Schnittstelle kann insbesondere als Applikation, d. h. als Software ausgebildet und zur Diagnose des Anlagensegments, insbesondere der antragstellenden Anlagenkomponente und/oder ihres Anlagenumfelds, eingerichtet sein. Eine derart ausgebildete Verwaltungseinrichtung ermöglicht es, die komponentenspezifische Information im Bedarfsfall, d. h. beispielsweise bei Anfrage durch den lokalen Registrierungsdienst, zusammenzustellen.

In einer weiteren bevorzugten Ausführungsform enthält die komponentenspezifische Information eine Projektzugehörigkeit, die beispielsweise durch ein projektspezifisches Gerätezertifikat belegt werden kann, ein netzwerkspezifisches Identifikationsmerkmal und/oder eine Funktionscharakteristik, insbesondere der antragstellenden Anlagenkomponente. Durch solche auch als Metainformation bezeichneten Merkmale kann die antragstellende Komponente insbesondere im Anlagenkontext eingeordnet werden. Beispielsweise kann ihre Funktion und/oder das Zusammenspiel mit anderen Anlagenkomponenten ermittelt werden. Auf dieser Grundlage kann eine vollumfängliche Prüfung des Antrags durch einen Registrierungsdienst erfolgen.

Anhand der Projektzugehörigkeit kann beispielsweise festgestellt werden, ob, und wenn ja, welchem Projekt die antragstellenden Komponente zugeordnet ist. Falls keine Projektzugehörigkeit vorliegt, besteht üblicherweise auch keine Notwendigkeit, Zertifikate - beispielsweise für eine verschlüsselte Kommunikation innerhalb des Projekts - zu erneuern.

Anhand des netzwerkspezifischen Identifikationsmerkmals, beispielsweise einer IP- oder MAC-Adresse, kann z. B. die Kompatibilität und/oder die Berechtigung der antragstellenden Komponente zur Kommunikation mit einer anderen Anlagenkomponente festgestellt werden.

Anhand einer Funktionscharakteristik, d. h. einer Information bezüglich der durch die Anlagenkomponente bereitgestellten Funktionen oder Funktionscluster, kann beispielsweise festgestellt werden, ob die antragstellende Komponente das für eine bestimmte Funktion beantragte Zertifikat überhaupt benötigt. Solche Funktionen können beispielsweise die Überwachung und Steuerung von in der Anlage ablaufenden Prozessen und/oder die Diagnose bzw. Wartung von anderen Anlagenkomponenten umfassen.

In einer weiteren bevorzugten Ausführungsform ist der zentrale Registrierungsdienst dazu eingerichtet, eine Zertifizierung des lokalen Registrierungsdiensts auf Grundlage von im Software-Inventar gespeicherter Information zu prüfen. Der zentrale Registrierungsdienst kann insbesondere dazu eingerichtet sein, zu prüfen, ob zum wenigstens einen lokalen Registrierungsdienst bereits eine etablierte Vertrauensbeziehung besteht. Beispielsweise kann ein Signierzertifikat des lokalen Registrierungsdiensts im Software-Inventar hinterlegt sein oder werden, anhand dessen der zentrale Registrierungsdienst die Zulässigkeit der Weiterleitung eines Zertifizierungsantrags durch den lokalen Registrierungsdienst feststellen kann. Ein solches Signierzertifikat, gegebenenfalls mitsamt der zugehörigen Vertrauenskette (Trust Chain), kann beispielsweise beim Initialisieren der Anlage oder zumindest des dem wenigstens einen lokalen Registrierungsdienst zugeordneten Anlagensegments oder im Rahmen eines zentral veranlassten Zertifikat-Rollouts an den zentralen Registrierungsdienst zur Speicherung im Software-Inventar übermittelt werden. Anhand des gespeicherten Signierzertifikats und gegebenenfalls der Vertrauenskette kann der zentrale Registrierungsdienst dann beispielsweise eine Signatur des lokalen Registrierungsdienstes im übermittelten Zertifizierungsantrag prüfen. Der zentrale Registrierungsdienst kann insbesondere prüfen, ob die Signatur zum Zertifikatsantrag passt, ob sie durch den jeweiligen lokalen Registrierungsdienst ausgestellt wurde und/oder ob sie vertrauenswürdig ist, d. h. ob sie anhand der Vertrauenskette bis zu einem zentralen Zertifizierungsdienst zurückzuführen ist. Dadurch kann das Vertrauen in durch den zentralen Registrierungsdienst geprüfte und daraufhin, insbesondere von einem zentralen Zertifizierungsdienst, erteilte Zertifikate weiter erhöht werden.

Dabei ist der zentrale Registrierungsdienst vorzugsweise dazu eingerichtet, das Software-Inventar in Abhängigkeit eines Ergebnisses der Prüfung der Zertifizierung des lokalen Registrierungsdiensts zu verwalten, insbesondere im Software-Inventar gespeicherte Information nur dann zu aktualisieren oder einen neuen Datensatz anzulegen, wenn eine Vertrauensbeziehung zum lokalen Registrierungsdienst besteht, d. h. der lokale Registrierungsdienst authentifiziert ist bzw. wird.

In einer weiteren bevorzugten Ausführungsform ist der wenigstens eine lokale Registrierungsdienst dazu eingerichtet, den Zertifizierungsantrag vor dem Übermitteln an den zentralen Registrierungsdienst zu authentifizieren. Beispielsweise kann der wenigstens eine lokale Registrierungsdienst einen, insbesondere durch ihn im Rahmen einer Vorprüfung validierten, Zertifizierungsantrag mit einem Signierzertifikat signieren. Der zentrale Registrierungsdienst ist dabei vorzugsweise dazu eingerichtet, lediglich solche Zertifizierungsanträge zu validieren und zum Beispiel an einen zentralen Zertifizierungsdienst weiterzuleiten, wenn ein solches Signierzertifikat vorliegt. Dadurch kann das Vertrauen in die Kommunikationssicherheit im Leitsystem weiter erhöht werden.

In einer weiteren bevorzugten Ausführungsform ist der zentrale Registrierungsdienst dazu eingerichtet, insbesondere auf Grundlage des authentifizierten Zertifizierungsantrags, eine Information im Software-Inventar zu speichern, auf deren Grundlage eine Zertifizierung des wenigstens einen lokalen Registrierungsdiensts geprüft werden kann. Die Information kann beispielsweise ein Signaturzertifikat des lokalen Registrierungsdiensts und/oder um einen Zertifizierungspfad (Trust Chain) zum Signierzertifikat, mit dem der lokale Registrierungsdienst den Zertifizierungsantrag signiert hat, umfassen. Auf diese Weise kann auch während des Betriebs der Anlage eine Vertrauensbeziehung zwischen dem wenigstens einen lokalen Registrierungsdienst und den zentralen Registrierungsdienst hergestellt werden.

Ein zweiter Aspekt der Erfindung betrifft ein Verfahren zum Zertifikatsmanagement in einer verfahrenstechnischen Anlage, aufweisend die Schritte: (i) Übermitteln, durch einen lokalen Registrierungsdienst, eines Zertifizierungsantrags einer Anlagenkomponente zusammen mit, insbesondere im Zertifizierungsantrag enthaltener, komponentenspezifischer Information an einen zentralen Registrierungsdienst; (ii) Verwalten eines zentralen Software-Inventars, in dem die komponentenspezifische Information speicherbar ist, durch den zentralen Registrierungsdienst auf Grundlage der übermittelten komponentenspezifischen Information; und (iii) Prüfen des Zertifizierungsantrags durch den zentralen Registrierungsdienst auf Grundlage der im Software-Inventar gespeicherten komponentenspezifischen Information.

In einer bevorzugten Ausführungsform ermittelt der lokale Registrierungsdienst die komponentenspezifische Information aus dem Umfeld der antragstellenden Anlagenkomponente. Ein Umfeld kann hierbei insbesondere ein, vorzugsweise autark funktionsfähiges und abgesichertes, Anlagensegment der Anlage sein, das z. B. räumlich und/oder datentechnisch, etwa durch eine Firewall, von anderen Anlagensegmenten getrennt ist. Vorzugsweise greift der Registrierungsdienst dabei nicht direkt auf die antragstellende Komponente zu. Beispielsweise kann der lokale Registrierungsdienst die komponentenspezifische Information bei einer Verwaltungseinrichtung, die zur Verwaltung, insbesondere zur Konfiguration und/oder Steuerung, der antragstellenden Anlagenkomponente eingerichtet ist, insbesondere über eine entsprechende Schnittstelle, beantragen bzw. abfragen. Dadurch kann die komponentenspezifische Information bereitgestellt werden, auch wenn die antragstellende Komponente zeitweise nicht verfügbar, zum Beispiel heruntergefahren, ist.

Die bisher gegebene Beschreibung bevorzugter Ausführungsformen der Erfindung enthält zahlreiche Merkmale, die in den einzelnen abhängigen Ansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem Leitsystem gemäß dem ersten Aspekt der Erfindung und dem Verfahren gemäß dem zweiten Aspekt der Erfindung kombinierbar. Die voranstehend beschriebenen Eigenschaften, Merkmale und Vorteile der Erfindung sowie die Art und Weise, wie diese erreicht werden, werden im Zusammenhang mit der folgenden Beschreibung von Ausführungsbeispielen der Erfindung, die im Zusammenhang mit den Figuren, in denen durchgängig dieselben Bezugszeichen für dieselben oder einander entsprechende Elemente der Erfindung verwendet werden, näher erläutert. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale der Ausführungsbeispiele auch explizit isoliert betrachtet und mit einem beliebigen der Ansprüche kombiniert werden.

Es zeigen, zumindest teilweise schematisch:
- FIG 1: ein Beispiel eines Leitsystems zum Zertifikatsmanagement einer verfahrenstechnischen Anlage;
- FIG 2: ein Beispiel eines Software-Inventars; und
- FIG 3: ein Beispiel eines Verfahrens zum Zertifikatsmanagement.

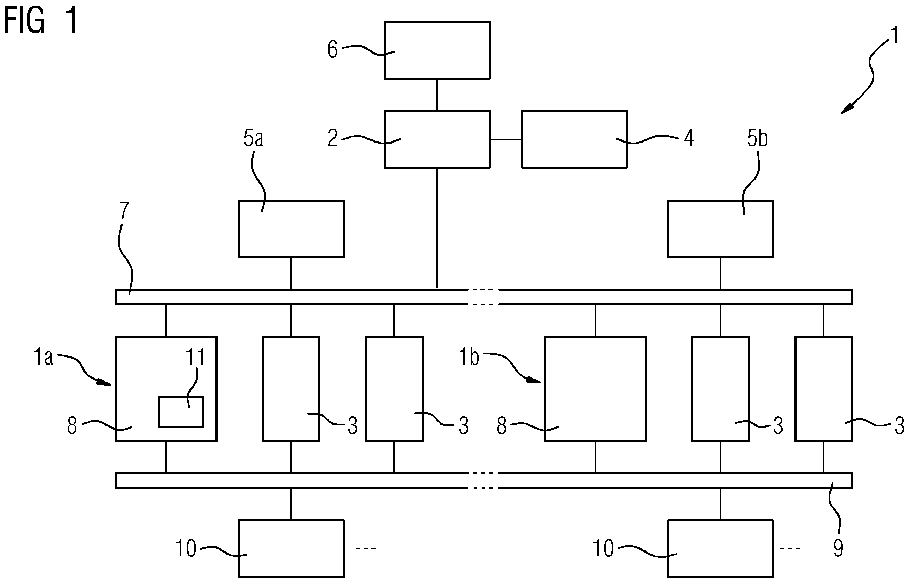

**FIG 1** zeigt ein Beispiel eines Leitsystems 1 zum Zertifikatsmanagement in einer verfahrenstechnischen Anlage. Das Leitsystem 1 weist einen zentralen Registrierungsdienst 2 zum Prüfen eines Zertifizierungsantrags, der von einer der Anlagenkomponenten 3 gestellt wird, ein Software-Inventar 4 zum Speichern komponentenspezifischer, d. h. die jeweiligen Anlagenkomponenten 3 betreffende Information sowie im vorliegenden Beispiel zwei lokale Registrierungsdienste 5a, 5b zum Weiterleiten des Zertifizierungsantrags von der jeweiligen Anlagenkomponente 3 zum zentralen Registrierungsdienst 2 auf. Der zentrale Registrierungsdienst 2 ist dabei dazu eingerichtet, den Zertifizierungsantrag auf Grundlage der im Software-Inventar 4 gespeicherten, insbesondere komponentenspezifischen, Information zu prüfen und in Abhängigkeit eines Ergebnisses der Prüfung, insbesondere bei einer Validierung des Zertifizierungsantrags, an einen zentralen Zertifizierungsdienst 6 weiterzuleiten, welcher das entsprechende Zertifikat für die Anlagenkomponente 3 ausstellt. Gleichzeitig ist der zentrale Registrierungsdienst 2 auch dazu eingerichtet, das Software-Inventar 4 zu verwalten, und zwar auf Grundlage komponentenspezifischer Information, die dem zentralen Registrierungsdienst 2 von einem der lokalen Registrierungsdienste 5a, 5b zusammen mit dem Zertifizierungsantrag übermittelt wird. Dies ermöglicht das vollautomatische und dynamische Verwalten des Software-Inventars 4.

Zur Übermittlung von Zertifizierungsanträgen sowie der komponentenspezifischen Information sind der zentrale Registrierungsdienst 2 und die lokalen Registrierungsdienste 5 vorzugsweise über ein Netzwerk, beispielsweise einen Terminalbus 7, miteinander verbunden. An den Terminalbus 7 sind in bevorzugter Weise auch Anlagensegmente 1a, 1b der Anlage angeschlossen, wobei die Anlagensegmente 1a, 1b beispielsweise durch eine räumliche und/oder datentechnische, etwa mithilfe von Firewalls erzeugte, Trennung sogenannte Sicherheitszellen definieren können, die autark funktionsfähig sind. Vorzugsweise ist jedem Anlagensegment 1a, 1b ein lokaler Registrierungsdienst 5a, 5b zugeordnet.

Pro Anlagensegment 1a, 1b kann dabei jeweils eine auch als Engineering Station bezeichnete Verwaltungseinrichtung 8 vorgesehen sein, die über ein weiteres Netzwerk, beispielsweise einen als Industrial Ethernet ausgebildeten Anlagenbus 9, mit den Anlagenkomponenten 3 des jeweiligen Anlagensegments 1a, 1b verbunden ist. Die Verwaltungseinrichtungen 8 umfassen vorzugsweise die Projektierung des jeweiligen Anlagensegments 1a, 1b, d. h. sie sind zur Konfiguration und/oder Steuerung der Anlagenkomponenten 3 des jeweiligen Anlagensegments 1a, 1b eingerichtet. Über den Anlagenbus 9 stehen die Verwaltungseinrichtungen 8 sowie die im vorliegenden Beispiel als Nutzerserver (Operator Station Server) ausgebildeten Anlagenkomponenten 3 vorzugsweise auch mit Peripheriekomponenten 10, zum Beispiel Sensoren, Ventilen, Aktoren und/oder dergleichen, zum Steuern von Prozessen in Verbindung.

Benötigt eine der Anlagenkomponenten 3 ein Zertifikat, zum Beispiel für die verschlüsselte Server-Server Kommunikation, kann von der jeweiligen Anlagenkomponente 3 ein entsprechender Zertifizierungsantrag gestellt werden, der über den Terminalbus 7 an den zuständigen lokalen Registrierungsdienst 5a, 5b übermittelt wird. Der lokale Registrierungsdienst 5a, 5b ist vorzugsweise dazu eingerichtet, daraufhin die komponentenspezifische Information zur antragstellenden Anlagenkomponente 3 bei der jeweiligen Verwaltungseinrichtung 8 anzufordern. In bevorzugter Weise ist die Verwaltungseinrichtung 8 dazu eingerichtet, diese Information mithilfe einer entsprechenden Schnittstelle 11 zu ermitteln und dem anfordernden lokalen Registrierungsdienst 5a, 5b zur Verfügung zu stellen. Die Schnittstelle 11 kann z. B. als Applikation ausgebildet sein und auf die Projektierung des Anlagensegments 1a, 1b zugreifen. Aus der Projektierung kann die Schnittstelle 11 Metainformation ableiten, zum Beispiel betreffend die Funktionalität einzelner Anlagenkomponenten 3 und/oder ihr Zusammenspiel mit anderen Anlagenkomponenten 3, und gegebenenfalls zur Verwendung durch den lokalen Registrierungsdienst 5a, 5b bzw. den zentralen Registrierungsdienst 2 aufbereiten.

Die lokalen Registrierungsdienste 5a, 5b können dazu eingerichtet sein, auf Grundlage der durch die Verwaltungseinrichtungen 8 bereitgestellten komponentenspezifischen Information eine Vorprüfung des jeweiligen an sie übermittelten Zertifizierungsantrags durchzuführen. Im Falle einer Validierung des Zertifizierungsantrags durch den entsprechenden lokalen Registrierungsdienst 5a, 5b kann der Zertifizierungsantrag beispielsweise gemäß einem Standardprotokoll, z. B. dem auch als Certificate Management Protocol (CMP) bezeichneten Zertifikat-Verwaltungsprotokoll nach dem Standard RFC 4210, über den Terminalbus 7 an den zentralen Registrierungsdienst 2 übermittelt werden. Vorzugsweise ist der zuständige lokale Registrierungsdienst 5a, 5b dabei dazu eingerichtet, den Zertifizierungsantrag in das Standardprotokoll umzuwandeln, falls der Zertifizierungsantrag von der Anlagenkomponente 3 mithilfe eines anderen Standards, z. B. der Open Platform Communications (OPC) Unified Architecture (UA) GDS, übertragen wird.

Des Weiteren sind die lokalen Registrierungsdienste 5a, 5b vorzugsweise dazu eingerichtet, die komponentenspezifische Information zusammen mit dem jeweiligen Zertifizierungsantrag, insbesondere als Teil des jeweiligen Zertifizierungsantrags, an den zentralen Registrierungsdienst 2 zu übermitteln. Entspricht der Antrag dabei einer initialen Beantragung eines Zertifikats (Bootstrapping), wird die komponentenspezifische Information in das Software-Inventar 4 eingetragen. Die komponentenspezifische Information kann somit zumindest einen Teil eines neuen Datensatzes bilden. Entspricht der Antrag dagegen einem Erneuerungsantrag (Update), sucht der zentrale Registrierungsdienst 2 vorzugsweise nach einem Eintrag im Software-Inventar 4 zur entsprechenden Anlagenkomponente 3 und vergleich gegebenenfalls die übermittelte komponentenspezifische Information mit im Software-Inventar 4 gespeicherter Information. In Abhängigkeit eines Ergebnisses des Vergleichs kann der zentrale Registrierungsdienst 2 die im Software-Inventar 4 gespeicherte Information dann gegebenenfalls aktualisieren. Dadurch kann sichergestellt werden, dass beim Prüfen von Zertifizierungsanträgen durch den zentralen Registrierungsdienst 2 immer aktuelle komponentenspezifische Information zur Verfügung steht.

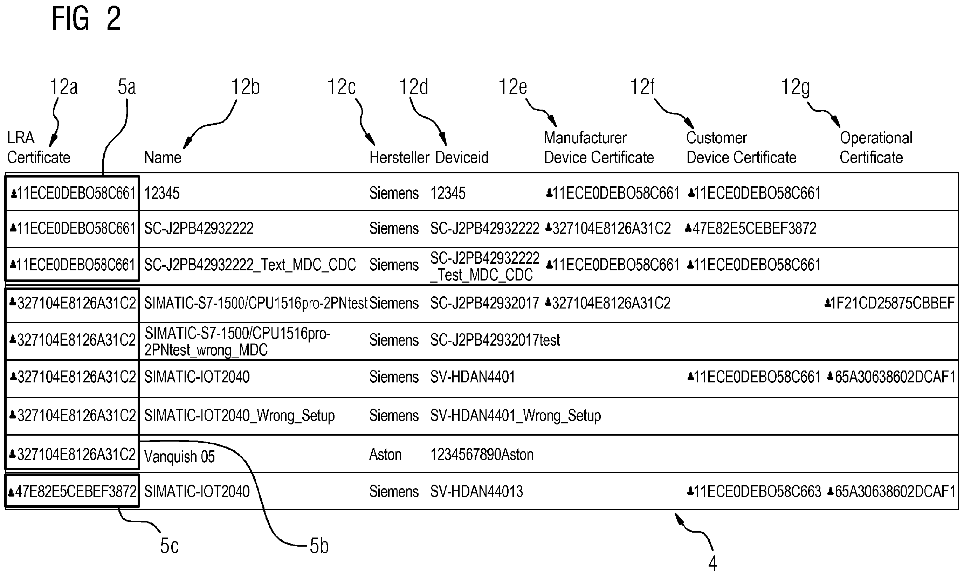

Dies ist im Zusammenhang mit **FIG 2** gezeigt. FIG 2 zeigt ein Beispiel eines Software-Inventars 4, das Teil eines Leitsystems einer verfahrenstechnischen Anlage ist. Vorliegend ist das Software-Inventar 4 als Datenbank ausgebildet. Rein beispielhaft enthält die Datenbank neun Datensätze mit jeweils sieben Datenfeldern, wobei jeder Datensatz in einer Zeile dargestellt und einer Anlagenkomponente zugeordnet ist.

Im vorliegenden Beispiel können jeweils mehrere Datensätze in Bezug auf einen lokalen Registrierungsdienst 5a, 5b, 5c, über den ein Zertifizierungsantrag der jeweiligen Anlagenkomponente an einen zentralen Registrierungsdienst übermittelt wird, zusammengefasst sein. Jeder lokale Registrierungsdienst 5a, 5b, 5c ist dabei anhand eines Signierzertifikats im Software-Inventar 4 zertifiziert, wodurch eine Vertrauensbeziehung zu den lokalen Registrierungsdienst 5a, 5b, 5c belegt ist. Die Zertifizierung ist hierbei durch einen Eintrag in die Datenfelder 12a realisiert.

Die Bezeichnung der entsprechenden Anlagenkomponenten ist in den Datenfeldern 12b angegeben. Datenfelder 12c geben den Hersteller der jeweiligen Anlagenkomponente an, während in Datenfeldern 12d eine Seriennummer der jeweiligen Anlagenkomponente hinterlegt ist. Des Weiteren sind in Datenfeldern 12e Herstellerzertifikate, in Datenfeldern 12f Benutzerzertifikate und in Datenfeldern 12g operative Zertifikate gespeichert. Selbstverständlich kann aber auch andere komponentenspezifische Information in den Datenfeldern hinterlegt sein.

Wie im vorliegenden Beispiel gezeigt muss nicht in jedem der Datenfelder 12a-g eine Information hinterlegt sein. Insbesondere kann das Software-Inventar 4 dynamisch, d. h. im Betrieb der verfahrenstechnischen Anlage, aktualisiert, insbesondere erweitert, werden. Beispielsweise kann beim Empfangen eines Zertifizierungsantrags durch den zentralen Registrierungsdienst ein bereits bestehender Datensatz durch weitere komponentenspezifische Information ergänzt werden. Natürlich ist es auch möglich, bereits gespeicherte Information zu aktualisieren, d. h. durch neue Information zu ersetzen. Wenn die antragstellende Anlagenkomponente dagegen noch unbekannt ist, kann ein neuer Datensatz im Software-Inventar 4 angelegt werden.

Ein neuer Datensatz kann auch hinzugefügt werden, wenn ein lokaler Registrierungsdienst 5a, 5b, 5c zum Herstellen einer Vertrauensbeziehung ein Signierzertifikat, insbesondere bei Inbetriebnahme der Anlage oder zumindest eines Anlagensegments, an den zentralen Registrierungsdienst übermittelt. In diesem Fall enthält der neue Datensatz lediglich einen Eintrag im Datenfeld 12a. Geht später ein Zertifizierungsantrag einer Anlagenkomponente über diesen lokalen Registrierungsdienst 5a, 5b, 5c beim zentralen Registrierungsdienst ein, kann der Datensatz wie beschrieben erweitert bzw. aktualisiert werden.

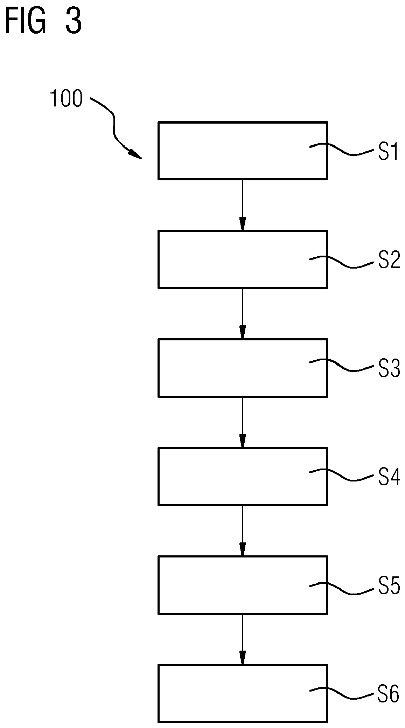

**FIG 3** zeigt ein Beispiel eines Verfahrens 100 zum Zertifikatsmanagement in einer verfahrenstechnischen Anlage. In einem Verfahrensschritt S1 wird dabei ein Zertifizierungsantrag von einer Anlagenkomponente gestellt, beispielsweise weil die Komponente mit einer weiteren Anlagenkomponente verschlüsselt kommunizieren möchte und dazu ein entsprechendes Zertifikat benötigt. Die Anlagenkomponente übermittelt den Zertifizierungsantrag an einen lokale Registrierungsdienst, der vorzugsweise einem Anlagensegment zugeordnet ist, dessen Teil die Anlagenkomponente ist und das gegenüber anderen Segmenten der Anlage zum Beispiel abgesichert ist, etwa durch räumliche Trennung und/oder datentechnisch.

In einem Verfahrensschritt S2 ermittelt der lokale Registrierungsdienst komponentenspezifische Information, insbesondere Metainformation, welche beispielsweise die Funktion der Anlagenkomponente im Anlagensegment und/oder ihr Zusammenspiel mit anderen Anlagenkomponenten beschreibt. In diesem Sinne kann es sich bei der komponentenspezifischen Information z. B. auch um Zertifikate handeln, welche zur Kommunikation zwischen Anlagenkomponenten benötigt werden.

Beim Ermitteln der Information greift der lokale Registrierungsdienst vorzugsweise nicht direkt auf die betreffende Anlagenkomponente, sondern auf ein Anlagenumfeld der Komponente zu. So kann der lokale Registrierungsdienst etwa auf eine Verwaltungseinrichtung zugreifen, die zur Konfiguration und/oder Steuerung aller Anlagenkomponenten im Anlagensegment eingerichtet ist. Solch eine Verwaltungseinrichtung verfügt damit in der Regel über die gewünschte komponentenspezifische Information oder zumindest über Information, aus der sich die gewünschte komponentenspezifische Information ableiten lässt.

In einem weiteren Verfahrensschritt S3 prüft der lokale Registrierungsdienst den Zertifizierungsantrag auf Grundlage der ermittelten komponentenspezifischen Information. Beispielsweise kann der lokale Registrierungsdienst prüfen, ob eine von der Anlagenkomponente beabsichtigte Kommunikation, für die das Zertifikat beantragt wird, im Rahmen einer Projektierung überhaupt vorgesehen ist. Zum Zeichen der Validierung des Zertifizierungsantrags kann der lokale Registrierungsdienst den Zertifizierungsantrag signieren, etwa mithilfe eines Signierzertifikats, welches von einem zentralen Zertifizierungsdienst für den lokalen Registrierungsdienst ausgestellt wird.

Der derart validierte Zertifizierungsantrag wird zusammen mit der komponentenspezifischen Information vom lokalen Registrierungsdienst in einem weiteren Verfahrensschritt S4 an einen zentralen Registrierungsdienst übermittelt. Dabei kann der lokale Registrierungsdienst den Zertifizierungsantrag mit der komponentenspezifischen Information anreichern. In einem weiteren Verfahrensschritt S5 verwendet der zentrale Registrierungsdienst diese komponentenspezifische Information, gegebenenfalls nach einer Extraktion aus dem übermittelten Zertifizierungsantrag, um ein Software-Inventar zu verwalten. Der zentrale Registrierungsdienst kann beispielsweise die übermittelte komponentenspezifische Information mit im Software-Inventar gespeicherter Information vergleichen und das Software-Inventar, in Abhängigkeit eines Ergebnisses des Vergleichs, aktualisieren oder ergänzen. Es ist auch denkbar, dass der zentrale Registrierungsdienst im Rahmen des Vergleichs Unstimmigkeiten bzw. Inkonsistenzen zwischen der übermittelten komponentenspezifischen Information und im Software-Inventar gespeicherter Information feststellt, beispielsweise wenn gemäß einem Eintrag im Software-Inventar zu einer weiteren Anlagenkomponente, mit welcher die antragstellende Anlagenkomponente gemäß der übermittelten komponentenspezifischen Information kommunizieren möchte, eine Kommunikation mit der antragstellenden Anlagenkomponente gar nicht erlaubt ist. In diesem Fall kann der zentrale Registrierungsdienst ein entsprechendes Signal, zum Beispiel in Form einer Mitteilung an einen Benutzer der Anlage, erzeugen und/oder ausgeben.

Zudem prüft der zentrale Registrierungsdienst in einem weiteren Verfahrensschritt S6 den Zertifizierungsantrag auf Grundlage der im zentralen Software-Inventar gespeicherten Information. Dabei kann insbesondere geprüft werden, ob zum übermittelnden lokalen Registrierungsdienst eine Vertrauensbeziehung besteht, etwa indem die Signatur des lokalen Registrierungsdiensts im Zertifizierungsantrag auf Grundlage von im Software-Inventar gespeicherter Information authentifiziert wird. In Abhängigkeit eines Ergebnisses der Prüfung kann der zentrale Registrierungsdienst den Zertifizierungsantrag dann validieren, zum Beispiel signieren, und an den zentralen Zertifizierungsdienst zur Ausstellung des beantragten Zertifikats weiterleiten.

### Bezugszeichenliste

- 1: Leitsystem
- 1a, 1b: Anlagensegment
- 2: zentraler Registrierungsdienst
- 3: Anlagenkomponente
- 4: Software-Inventar
- 5a-c: lokaler Registrierungsdienst
- 6: Zertifizierungsdienst
- 7: Terminalbus
- 8: Verwaltungseinrichtung
- 9: Anlagenbus
- 10: Peripheriekomponente
- 11: Schnittstelle
- 12a-g: Datenfelder

- 100: Verfahren

- S1-S6: Verfahrensschritte

## Patentansprüche

1. Leitsystem (1) für eine verfahrenstechnischen Anlage, mit
- einem zentralen Registrierungsdienst (2), der dazu eingerichtet ist, einen Zertifizierungsantrag einer Anlagenkomponente (3) auf Grundlage komponentenspezifischer Information zu prüfen;
- einem Software-Inventar (4), das dazu eingerichtet ist, die komponentenspezifische Information zu speichern; und
- wenigstens einem lokalen Registrierungsdienst (5a, 5b, 5c), der dazu eingerichtet ist, den Zertifizierungsantrag von der Anlagenkomponente (3) an den zentralen Registrierungsdienst (2) zu übermitteln;
**dadurch gekennzeichnet,**
**dass** der wenigstens eine lokale Registrierungsdienst (5a, 5b, 5c) dazu eingerichtet ist, die komponentenspezifische Information zusammen mit dem Zertifizierungsantrag an den zentralen Registrierungsdienst (2) zu übermitteln, und der zentrale Registrierungsdienst (2) dazu eingerichtet ist, das Software-Inventar (4) auf Grundlage der vom lokalen Registrierungsdienst (5a, 5b, 5c) übermittelten komponentenspezifischen Information zu verwalten.

2. Leitsystem (1) nach Anspruch 1,
**dadurch gekennzeichnet,**
**dass** der zentrale Registrierungsdienst (2) dazu eingerichtet ist, auf Grundlage der übermittelten komponentenspezifischen Information bereits im Software-Inventar (4) gespeicherte Information zu aktualisieren.

3. Leitsystem (1) nach einem der vorangehenden Ansprüche,
**dadurch gekennzeichnet,**
**dass** der zentrale Registrierungsdienst (2) dazu eingerichtet ist, für eine Anlagenkomponente (3), zu der noch keine Information im Software-Inventar (4) gespeichert ist, einen neuen Datensatz auf Grundlage der übermittelten komponentenspezifischen Information anzulegen.

4. Leitsystem (1) nach einem der vorangehenden Ansprüche,
**dadurch gekennzeichnet,**
**dass** der zentrale Registrierungsdienst (2) dazu eingerichtet ist, die übermittelte komponentenspezifische Information mit im Software-Inventar (4) gespeicherter Information zu vergleichen und bei Feststellen einer Inkonsistenz ein entsprechendes Signal zu erzeugen.

5. Leitsystem (1) nach einem der vorangehenden Ansprüche,
**dadurch gekennzeichnet,**
**dass** der wenigstens eine lokale Registrierungsdienst (5a, 5b, 5c) dazu eingerichtet ist, den Zertifizierungsantrag der Anlagenkomponente (3) auf Grundlage der komponentenspezifischen Information einer Vorprüfung zu unterziehen.

6. Leitsystem (1) nach einem der vorangehenden Ansprüche,
**dadurch gekennzeichnet,**
**dass** der wenigstens eine lokale Registrierungsdienst (5a, 5b, 5c) dazu eingerichtet ist, die komponentenspezifische Information von einer Verwaltungseinrichtung (8) zu beziehen, welche zur Verwaltung der Anlagenkomponente (3) eingerichtet ist.

7. Leitsystem (1) nach Anspruch 6,
**gekennzeichnet durch**
eine Verwaltungseinrichtung (8) mit einer Schnittstelle (11), wobei die Schnittstelle (11) dazu eingerichtet ist, komponentenspezifische Information zu ermitteln und für den wenigstens einen lokalen Registrierungsdienst (5a, 5b, 5c) bereitzustellen.

8. Leitsystem (1) nach einem der vorangehenden Ansprüche,
**dadurch gekennzeichnet,**
**dass** die komponentenspezifische Information eine Projektzugehörigkeit, ein netzwerkspezifisches Identifikationsmerkmal und/oder eine Funktionscharakteristik enthält.

9. Leitsystem (1) nach einem der vorangehenden Ansprüche,
**dadurch gekennzeichnet,**
**dass** der zentrale Registrierungsdienst (2) dazu eingerichtet ist, eine Zertifizierung des wenigstens eine lokalen Registrierungsdiensts (5a, 5b, 5c) auf Grundlage von im Software-Inventar (4) gespeicherter Information zu prüfen.

10. Leitsystem (1) nach einem der vorangehenden Ansprüche,
**dadurch gekennzeichnet,**
**dass** der wenigstens eine lokale Registrierungsdienst (5a, 5b, 5c) dazu eingerichtet ist, den Zertifizierungsantrag vor dem Übermitteln an den zentralen Registrierungsdienst (2) zu authentifizieren.

11. Leitsystem (1) nach Anspruch 10,
**dadurch gekennzeichnet,**
**dass** der zentrale Registrierungsdienst (2) dazu eingerichtet ist, eine Information im Software-Inventar (4) zu speichern, auf deren Grundlage eine Zertifizierung des wenigstens einen lokalen Registrierungsdiensts (5a, 5b, 5c) geprüft werden kann.

12. Verfahren (100) zum Zertifikatsmanagement in einer verfahrenstechnischen Anlage, aufweisend die Schritte:
- (S4) Übermitteln, durch einen lokalen Registrierungsdienst (5a, 5b, 5c), eines Zertifizierungsantrags einer Anlagenkomponente (3) zusammen mit komponentenspezifischer Information an einen zentralen Registrierungsdienst (2);
- (S5) Verwalten eines zentralen Software-Inventars (4), in dem die komponentenspezifische Information speicherbar ist, durch den zentralen Registrierungsdienst (2) auf Grundlage der übermittelten Information; und
- (S6) Prüfen des Zertifizierungsantrags durch den zentralen Registrierungsdienst (2) auf Grundlage der im Software-Inventar (4) gespeicherten komponentenspezifischen Information.

13. Verfahren (100) nach Anspruch 12,
**dadurch gekennzeichnet,**
**dass** der lokale Registrierungsdienst (5a, 5b, 5c) die komponentenspezifische Information aus dem Umfeld der antragstellenden Anlagenkomponente (3) ermittelt.
